# EUROPÄISCHE PATENTANMELDUNG

(11) **EP 0 856 445 A1**
(43) Veröffentlichungstag der Anmeldung: **05.08.1998**
(21) Anmeldenummer: 97120967.1
(22) Anmeldetag: 28.11.1997
(51) Int. Cl.: B60S 1/08

(54) **Regensensor**

(30) Priorität: 31.01.1997 DE 19703573
(71) Anmelder: Mannesmann VDO Aktiengesellschaft, 60388 Frankfurt/M. (DE)
(72) Erfinder: Berberich, Reinhold, 60439 Frankfurt (DE); Egger, Armin, 61350 Bad Homburg (DE)
(74) Vertreter: Rassler, Andrea, Dipl.-Phys.

(57) **Zusammenfassung**

Die Erfindung betrifft einen Regensensor (1), bestehend aus einer Sensorstruktur (31,41), welche auf der Außenseite einer Fahrzeugscheibe (2) im von einem Scheibenwischer überstreichbaren Bereich eines Kraftfahrzeuges angeordnet ist und mindestens eine Zuleitung (34,44) zur Herstellung einer leitenden Verbindung mit einem elektrischen Potential (V1,V2) innerhalb des Kraftfahrzeuges aufweist.

Ein Regensensors (1), bei welchem ein Abgleich der Auswerteelektronik hinsichtlich des Gesamtwiderstandes der Sensoreinheit entfällt, weist Zuleitungen (34,44) und eine Sensorstruktur (31,41) auf, die unterschiedliche Schichtdicken aufweisen.

## Beschreibung

Die Erfindung betrifft einen Regensensor, bestehend aus einer Sensorstruktur, welche auf der Außenseite einer Fahrzeugscheibe im von einem Scheibenwischer überstreichbaren Bereich eines Kraftfahrzeuges angeordnet ist, und mindestens eine Zuleitung zur Herstellung einer leitenden Verbindung mit einem elektrischen Potential innerhalb des Kraftfahrzeuges aufweist, sowie ein Verfahren zur Herstellung dieses Regensensors.

Es ist bekannt, an der Fahrzeugscheibe im Bereich des Scheibenwischers Regensensoren anzuordnen. Diese Regensensoren liefern in Abhängigkeit des jeweiligen sich auf der Fahrzeugscheibe befindlichen Feuchtigkeitsgrades an eine Auswerteschaltung innerhalb des Kraftfahrzeuges ein Signal, welches üblicherweise zur Ansteuerung der Scheibenwischer genutzt wird.

Sensoren, die sich auf der Außenseite der Fahrzeugscheibe befinden, bestehen aus zwei sich nicht berührenden Leiterbahnen, die parallel verlaufende, kammartig ineinandergreifende Leiterbahnabschnitte aufweisen, die untereinander elektrisch nicht verbunden sind. Sie sind als Strukturen mit konstanter Breite ausgebildet. Dabei sind die Leiterbahnen mit elektrischen Anschlußvorrichtungen versehen. Durch die Wassertröpfchen werden die elektrisch leitenden Bahnen derart überbrückt, daß ein elektrischer Meßstrom fließt. Der Kurzschluß der Leiterbahnen durch die Wassertröpfchen bewirkt eine Änderung des Gesamtwiderstandes des Sensors. In Abhängigkeit vom jeweiligen Feuchtegrad auf der Fahrzeugscheibe läßt sich somit über die Widerstandsänderung ein reproduzierbares elektrisches Signal erzeugen.

Solche Regensensoren werden üblicherweise in einer Dünnschichttechnik auf die Fahrzeugscheibe aufgebracht. Durch Herstellungstoleranzen variiert der Flächenwiderstand des Regensensors, insbesondere der Widerstand der Zuleitungen des Sensors, was von Regensensor zur Regensensor einen zusätzlichen Abgleich der Auswerteelektronik auf den jeweils vorhandenen Flächenwiderstand notwendig macht.

Der Erfindung liegt somit die Aufgabe zugrunde, einen Regensensor anzugeben, bei welchem ein Abgleich der Auswertelektronik entfällt.

Erfindungsgemäß wird die Aufgabe dadurch gelöst, daß die Zuleitung und die Sensorstruktur in Schichttechnik auf die Fahrzeugscheibe aufgebracht sind und Zuleitung und Sensorstruktur unterschiedliche Schichtdicken aufweisen.

Der Vorteil der Erfindung besteht darin, noch während des Herstellungsprozesses des Regensensors durch Variation des Flächenwiderstandes der Zuleitung den Gesamtwiderstand des Sensor einzustellen, so daß umfangreiche Abgleicharbeiten an der Auswerteelektronik entfallen. Vorteilhafterweise weist die Zuleitung eine größere Schichtdicke auf als die Sensorstruktur. Durch die größere Schichtdicke der Zuleitung wird außerdem ein besserer Schutz gegen Korrosionserscheinungen erreicht.

In einer Ausgestaltung besteht der Regensensor aus zwei Sensorleitbahnen, welche in einem ersten Abschnitt kammartig ineinandergreifende Leiterbahnabschnitte aufweisen, die die Sensorstruktur bilden und ein zweiter Abschnitt, welcher frei von Leiterbahnabschnitten ist, die Zuleitung bildet.

In einer Weiterbildung weist die Zuleitung der ersten Sensorleiterbahn eine andere Schichtdicke auf als die Zuleitung der zweiten Sensorleiterbahn.

Vorteilhafterweise ist mindestens ein Rand der Zuleitung und/oder der Leiterbahnabschnitte wellenförmig gestaltet. Durch diese Maßnahme wird die effektive Bahnlänge der Leiterbahn verlängert. Das hat zur Folge, daß ein bestimmter Widerstand einen wesentlichen geringeren Platzbedarf aufweist, als eine Leiterbahn mit einer konstanten Breite, d.h. mit einer glatten Randgestaltung.

In einer Ausführung sind Zuleitung und die Leiterbahnabschnitte leitfähig aus einer Metallnitridverbindung, vorzugsweise einer Chrom-Stickstoff-Verbindung, hergestellt. Solche Chromnitridschichten sind sehr hart und chemisch stabil gegenüber Einflüssen durch Luftverschmutzung, Salzwasser und Scheibenreinigungsmittel. Außerdem besitzen sie eine hohe Abriebfestigkeit gegenüber dem Einsatz von Scheibenwischern.

In einem Verfahren zur Herstellung des Regensensors werden die Zuleitung und die Sensorstruktur zunächst gleichzeitig mit einer einheitlichen Schichtdicke auf die Fahrzeugscheibe aufgebracht, anschließend wird die Sensorstruktur abgedeckt und die Schichtdicke der Zuleitung weiter erhöht.

Die Sensorstruktur und die Zuleitung werden in einem Sputterätz-Verfahren auf die Fahrzeugscheibe aufgebracht. Dies hat den Vorteil, daß die Schichtdicken direkt während des Beschichtungsprozesses gemessen werden können und der Prozeßablauf entsprechend den erreichten Schichtdicken zuverlässig gesteuert werden kann.

Die Erfindung läßt zahlreiche Ausführungsmöglichkeiten zu. Sie wird anhand der in den Figuren dargestellten Zeichnung näher erläutert.

Es zeigt:
- Fig. 1: ein erstes Ausführungsbeispiel der Erfindung
- Fig. 2: ein zweites Ausführungsbeispiel der Erfindung
- Fig. 3: Kontaktvorrichtung

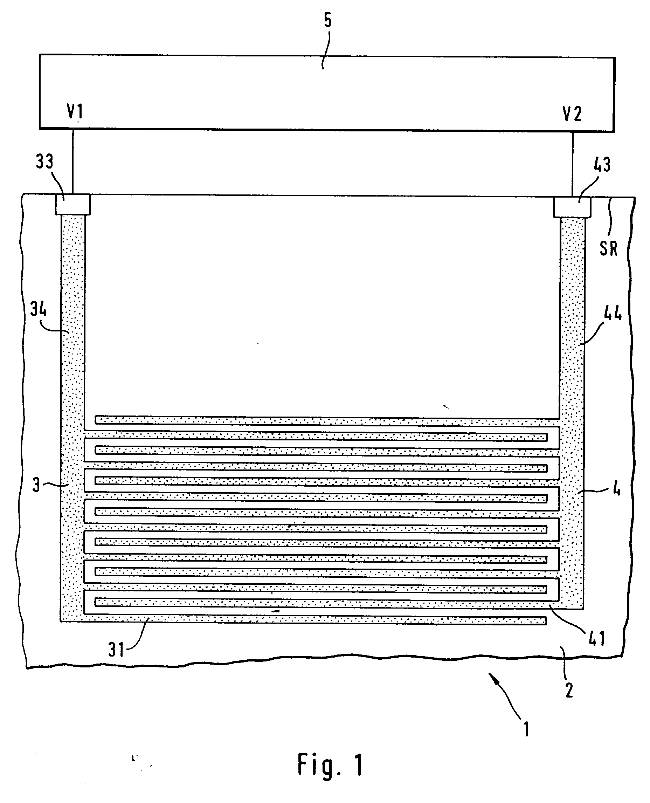

Die Figur 1 zeigt schematisch die gebräuchliche Struktur eines resistiven Regensensors 1, welcher außen auf der Fahrzeugscheibe 2 eines Kraftfahrzeuges im Bereich der Scheibenwischer angeordnet ist. In der Figur ist weiterhin der Fahrzeugscheibenrand SR angedeutet. Zwei kammartig ausgebildete Sensorleitbahnen 3 und 4 sind über Leitbahnabschnitte 31 und 41 ineinandergreifend angeordnet. Diese Leitbahnabschnitte 31 und 41 bilden die eigentliche Sensorstruktur. Im trockenen Zustand der Fahrzeugscheibe erfolgt durch den räumlichen Abstand der Leitbahnabschnitte 31, 41 eine ausreichende elektrische Isolierung zwischen den Sensorleitbahnen 3 und 4. Die dargestellte Sensorstruktur weist somit im trockenen Zustand der Scheibe einen hohen Gesamtwiderstand auf.

Die Sensorleitbahnen 3 und 4 sind über den Fahrzeugscheibenrand SR mittels Kontakteinrichtungen 33 und 43 in das Fahrzeuginnere geführt und über elektrische Zuleitungen mit den Potentialen V1 und V2 der nur angedeuteten Auswerteeinheit 5 zur Ansteuerung der Scheibenwischer verbunden. Diese Auswerteeinheit 5 überwacht die Änderung des Gesamtwiderstandes der Sensorstruktur, welcher bei zunehmender Feuchtigkeit abnimmt. Ausgehend von dem gemessenen Signal werden die Scheibenwischer über die Auswerteeinheit 5 automatisch angesteuert.

Die Sensorleitbahnen 3 und 4 weisen eine Zuleitung auf, welche von dem Bereich der Sensorleitbahn gebildet wird, die leitbahnabschnittfrei sind.

Die beschriebene Sensoranordnung wird in einem Sputterätzverfahren auf die Fahrzeugscheibe aufgebracht. Dabei werden in einem ersten Verfahrensschritt Zuleitungen 34, 44 und die Sensorstruktur 31, 41 gleichzeitig bis zum Erreichen einer vorgegebenen Schichtdicke von annähernd 100 nm aufgebracht. Anschließend wird die Sensorstruktur 31, 41 abgedeckt und nur die Zuleitungen 34 und 44 weiter beschichtet, bis zum Erreichen eines gewünschten Gesamtsensorwiderstandes. Es ist auch denkbar, daß nur eine Zuleitung weiter besputtert wird.

Sensorstruktur 31, 41 und Zuleitung 34, 44 bestehen aus einem Metallnitridverbindung, vorzugsweise einer Chrom-Stickstoff-Verbindung.

Die Auswerteeinheit 5 läßt sich besonders einfach durch den Einsatz eines Mikroprozessors realisieren. Der Mikroprozessor kann die Überwachung des Sensorwiderstandes zur automatischen Ansteuerung der Scheibenwischer ausführen.

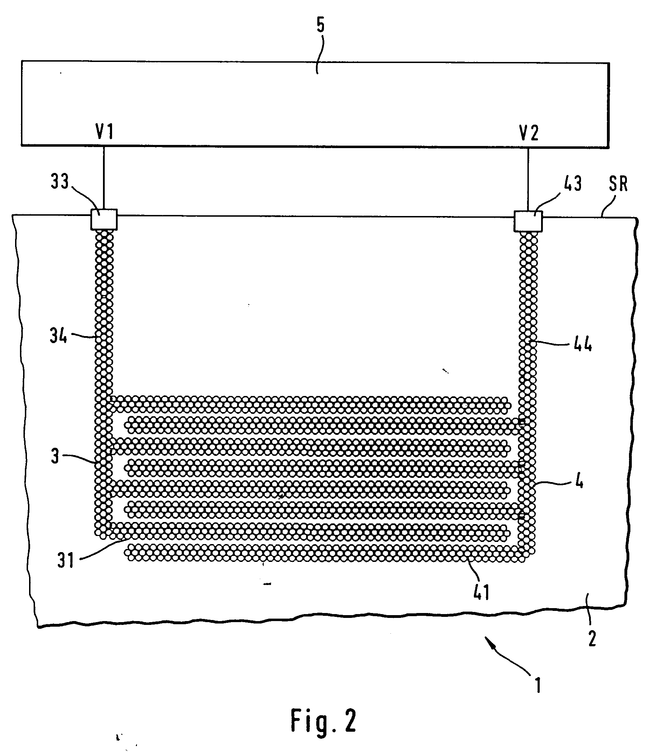

Figur 2 zeigt einen resistiven Regensensor, bei welchem gleiche Teile mit denselben Bezugszeichen wie in Figur 1 bezeichnet sind und der prinzipiell genauso aufgebaut ist, wie der gemäß Figur 1. Die Sensorleitbahnen 3 und 4 sind über die gesamte Länge wellenförmig gestaltet, so daß sich die Breite der Leiterbahnen in diesen Abschnitten stetig ändert. Der konstante Abstand zwischen den Leitbahnabschnitten 31, 41 beträgt weniger als 1,6 mm, vorzugsweise 0,5 mm. Durch diese wellenförmige Ausführung der Leiterbahnränder wird die wirksame Länge und der effektive Querschnitt der Leiterbahn verändert, was einer Änderung des Gesamtwiderstandes des Sensors nach sich zieht.

Die Leiterbahnen 3 und 4 werden geometrisch gemäß der gewählten Außenkontur verlängert. Bei Ausformung als aneinandergeformte Halbkreise ergibt sich eine Verlängerung der Leiterbahn um den Faktor π/2.

Übliche Widerstandsstrukturen weisen eine Fläche von 70 bis 80 cm auf, wobei die wirksame Länge der Leiterbahnen annähernd 6 Meter beträgt. Bei gleicher Fläche beträgt die wirksame Länge der erfindungsgemäß gestalteten Widerstandsstruktur ungefähr 10 Meter.

Es besteht auch die Möglichkeit nur die Leiterbahnabschnitte 31 und 41 entsprechend zu gestalten.

Die in Fig. 2 dargestellte Sensorstruktur, bestehend aus den Leiterbahnen 3 und 4 und den kammartig ineinandergreifenden Leitbahnabschnitten 31 und 41 ist einfach mit Hilfe eines Sputter-Ätzverfahrens auf der Fahrzeugscheibe hergestellt. Die die Leiterbahnen 3 und 4 bzw. die Leiterbahnabschnitte 31 und 41 bildenden Rasterpunkte sind dabei lichtdurchlässig durch eine entsprechende Maskierung ausgeführt.

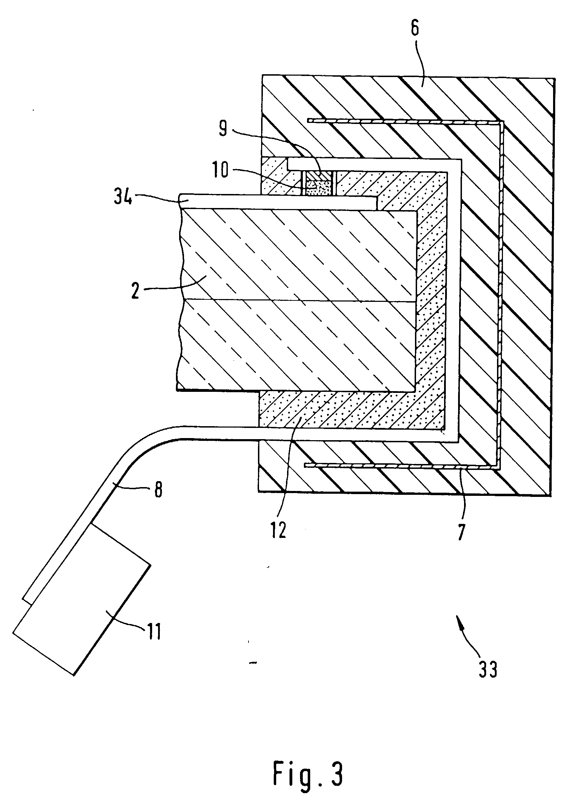

Eine Kontaktvorrichtung 33, 43, welche die auf der Fahrzeugscheibe vorhandenen Leiterbahnen 34, 44, mit einem Stecker 11 im Fahrzeuginnenraum kontaktiert, ist in Fig. 3 dargestellt.

Die Zuleitung 34 der Sensorleitbahn 3 ist auf der Fahrzeugscheibe 2 eines Kraftfahrzeuges innerhalb des Bereiches der Scheibenwischer aufgebracht. Die Zuleitung 34 besteht dabei vorzugsweise aus Chrom und Chromnitrid. Sie ist einige Atomlagen stark und wurde im Dünnschichtverfahren aufgetragen. Die Kontakteinheit besteht aus einem thermoplastischen Träger 6, in welchen zur mechanischen Stabilisierung eine Metalleinlage 7 eingebracht ist. Auf dem Träger 6 befindet sich eine Leiterbahn 8, die auf einer Flexfolie aufgedruckt ist. Diese Leiterbahn 8 besitzt gegenüberliegend der Zuleitung 34 einen Karbonkontaktpunkt 9, welcher von der Zuleitung 34 durch einen Leitkleber 10 getrennt ist und zu einer besseren Fixierung des Leitklebers dient. Die Leiterbahn 8 der Kontaktvorrichtung verbindet somit die Zuleitung 34 des Sensors über den Karbonkontaktpunkt 9 und den Leitkleber 10 elektrisch mit einem im Fahrzeug befindlichen angecrimmten Stecker 11, der die Verbindung zu der nicht dargestellten Auswerteeinheit 5 herstellt. Der Stecker 11 wird dabei direkt an die Kontakteinheit 33 montiert.

Auf dem Träger 6, z. B. einer Captonfolie, und der auf der Flexfolie aufgedruckten Leiterbahn 8 der Kontaktvorrichtung 33 ist eine Heißkleberschicht 12 aufgetragen, welche um den Kontaktpunkt 3 herum ausgespart bleibt.

Die beschriebene Kontakteinheit wird im erwärmten Zustand formschlüssig um die Kante SR der Fahrzeugscheibe 2 gebogen, so daß eine stabile leitende Verbindung zwischen Zuleitung 32, Leitkleber 10, Karbonkontaktpunkt 9, Leiterbahn 8 und Stecker 11 entsteht.

## Patentansprüche

1. Regensensor, bestehend aus einer Sensorstruktur, welche auf der Außenseite einer Fahrzeugscheibe im von einem Scheibenwischer überstreichbaren Bereich eines Kraftfahrzeuges angeordnet ist, und mindestens eine Zuleitung zur Herstellung einer leitenden Verbindung mit einem elektrischen Potential innerhalb des Kraftfahrzeuges aufweist, dadurch gekennzeichnet, daß die Zuleitung (34, 44) und die Sensorstruktur (31, 41) unterschiedliche Schichtdicken aufweisen.

2. Regensensor nach Anspruch 1, dadurch gekennzeichnet, daß zwei Sensorleiterbahnen (3, 4) in einem ersten Abschnitt kammartig ineinandergreifende Leiterbahnabschnitte (31, 41) aufweisen, welche die Sensorstruktur bilden und die Zuleitung (44, 34) von einem zweiten Abschnitt jeder Sensorleiterbahn gebildet wird, welcher frei von Leiterbahnabschnitten ist (41, 31).

3. Regensensor nach Anspruch 2, dadurch gekennzeichnet, daß die Zuleitung (34) der ersten Sensorleiterbahn (3) eine andere Schichtdicke aufweist, als die Zuleitung (44) der zweiten Sensorleiterbahn (4).

4. Regensensor nach einem der vorhergehenden Ansprüche 2 oder 3, dadurch gekennzeichnet, daß mindestens ein Rand der Zuleitung (34, 44) und/oder der Leiterbahnabschnitte (31, 41) wellenförmig gestaltet ist.

5. Regensensor nach einem der vorhergehenden Ansprüche, dadurch gekennzeichnet, daß die Zuleitung (34, 44) und die Leiterbahnabschnitte (31, 41) leitfähig aus einer Metallnitridverbindung hergestellt sind.

6. Regensensor nach Anspruch 5, dadurch gekennzeichnet, daß die Metallnitridverbindung eine Chrom-Stickstoff-Verbindung ist.

7. Verfahren zur Herstellung eines Regensensors gemäß Anspruch 1 mit zwei beabstandeten, parallel zueinander ausgerichteten Sensorleiterbahnen, die auf der Fahrzeugscheibe angeordnet sind, dadurch gekennzeichnet, daß die Zuleitungen (34, 44) und die Sensorstruktur (41, 31) zunächst mit einer einheitlichen Schichtdicke auf der Fahrzeugscheibe aufgebracht werden, anschließend die Sensorstruktur abgedeckt wird und die Schichtdicke der Zuleitung weiter erhöht wird.

8. Verfahren nach Anspruch 7, dadurch gekennzeichnet, daß die Sensorstruktur und die Zuleitung in einem Sputterätz-Verfahren auf die Fahrzeugscheibe aufgebracht werden.
